# EUROPEAN PATENT APPLICATION

(11) **EP 4 660 836 A1**
(43) Date of publication of application: **10.12.2025**
(21) Application number: 24179607.7
(22) Date of filing: 03.06.2024
(51) Int. Cl.: G06F 16/3329, G06F 16/9032, G06N 3/045, G06N 5/022

(54) **MATCHING INDUSTRIAL INFORMATION SOURCES WITH INFORMATION MODELS USING CONFIDENCE ASSESSMENT**

(71) Applicant: ABB SCHWEIZ AG, 5400 Baden (CH)
(72) Inventor: SCHOCH, Nicolai, 69120 Heidelberg (DE); HOERNICKE, Mario, 76829 Landau (DE)
(74) Representative: Maiwald GmbH

(57) **Abstract**

A computer-implemented method (100) for determining, for a given input (1) containing payload information (1a) about the layout, configuration and/or operating state of an industrial plant or any part thereof, an information model (5) into which the information contained in the given input fits, comprising the steps of:
• transforming (110), by a trained encoder (2), the given input (1) into a representation (3) in an embedding space (4);
• comparing (120) this representation (3) to representations (6) of multiple candidate information models (5*) in the same embedding space (4), wherein each information model (5*) identifies a collection of related information items (5a) with semantic meanings that at least partially characterizes the layout, configuration and/or operating state of the industrial plant or part thereof;
• pre-selecting (130), based on the result (120a) of this comparison, from the multiple candidate information models (5*), one or more candidate information models (5#) into which the information contained in the given input (1) is likely to fit;
• computing (140), for each pre-selected information model (5#), using a given confidence measure (7), a confidence (8) of the semantic suitability of the respective pre-selected information model (5#) for the given input (1); and
• selecting (150) an information model (5#) with the best confidence (8) of the semantic suitability as the chosen information model (5) into which the information contained in the given input (1) fits.

A corresponding method (200) for determining, for a given information model (5), from a plurality of candidate inputs (1*), a suitable input (1) for extracting payload information (1a).

## Description

### FIELD OF THE INVENTION

The invention relates to the management of information that relates to the configuration and/or operating state of an industrial plant or any part thereof.

### BACKGROUND

Industrial plants and their control systems are documented with a lot of human-readable documentation. For example, a piping and instrumentation diagram comprises the layout of the piping, process equipment, instrumentation and control devices. An input/output list details all input and output devices connected to particular controllers or a control system. Besides these structured collections of information, there is a lot of more documentation that is easy to understand for a human, but does not adhere to one fixed format. To be able to process this information by machine, it needs to be brought into some standard format that makes the semantic meaning of each piece of information unequivocally clear.

It is time-consuming and expensive to manually peruse the large amounts of documentation and attribute the information contained therein to particular semantic meanings. Generative machine learning models, such as large language models, LLM, or large vision models, LVM, may be used to understand the semantic meaning of the information and map it to field names in a standard format. However, the reliability of such a mapping is hard to control, in particular if the domain of the training data that was used to train the LLM or LVM is unknown.

### OBJECTIVE OF THE INVENTION

It is therefore an objective of the invention to improve the reliability with which payload information from structured or unstructured collections of information is mapped into information models comprising given semantic meanings.

This objective is achieved by
- a first method for determining, for a given input containing payload information, an information model into which the information contained in the given input fits according to a first independent claim and
- a second method for determining, for a given information model, a suitable input for populating this information model according to a second independent claim.

Further advantageous embodiments are detailed in the respective dependent claims.

### DISCLOSURE OF THE INVENTION

In a first aspect, the invention provides a computer-implemented method for determining, for a given input containing payload information about the layout, configuration and/or operating state of an industrial plant or any part thereof, an information model into which the information contained in the given input fits. For example, a textual document may be identified as information that best fits into an Asset Administration Shell, AAS, description of the plant, or as information that best fits into an Engineering Base, eBase, description of the plant.

To this end, a trained encoder transforms the given input into a representation in an embedding space. This representation is a multi-dimensional vector. This representation as such is just a set of numbers suitable for machine processing; it is abstract, and its semantic meaning is not transparent.

The representation of the given input text is compared to representations of multiple candidate information models. Each such information model identifies a collection of related information items with semantic meanings that at least partially characterizes the layout, configuration and/or operating state of the industrial plant or part thereof. Simple examples of information models are index cards or fill-out forms with pre-printed fields that ask for particular items of information with defined semantic meanings. The comparison may, for example, be made using a suitable similarity metric or distance metric in the embedding space. Thus, the similarity metric or distance metric may, in particular, depend on whether the given input contains the information that the respective information model is asking for. It may also depend on whether the information model is asking for all payload information contained in the given input or only part of it. In one example, if information model A can be fully populated with payload information from the given input, whereas information model B can be only partially populated with payload information from the given input, but absorb all this payload information, the representation of information model B is likely to be closer to the representation of the given input in embedding space. In another example, if the given input or candidate input describes a particularly important aspect of a plant or component thereof, and a part of the candidate or given information model relates to this important aspect, then the representation of the input is likely to be close to the representation of the information model in embedding space. For example, the important aspect may relate to the functionality of a plant component, such as stirring, reaction or heating, and a control narrative text may contain much salient information on this functionality to which an information model part relates.

That is, the representations of information models that are used in the comparison are not required to relate to respective entire information models, but can also relate to parts of information models. In the example presented above, this makes sense: The fact that the control narrative text describes the important aspect of the information model part stays the same no matter whether the information model contains, on top of this important aspect, 10, 100 or 1000 less important aspects. The important match is not "watered down" just by the presence of more less important aspects. For better readability, only the term "information models", rather than "information models or parts thereof" is used in the following.

Based on the result of the comparison, one or more candidate information models into which the information contained in the given input is likely to fit are selected from the multiple candidate information models. For example, a top-n selection of the closest or most similar information models may be made.

For each pre-selected information model, a confidence of the semantic suitability of the respective pre-selected information model for the given input is determined using a given confidence measure. Out of the pre-selected candidate information models, an information model with the best confidence of the semantic suitability is selected as the chosen information model into which the information contained in the given input fits.

It was found that the determining of the confidence of the semantic suitability allows to quantify the uncertainty of the mapping from the given input to the information model. This helps a great deal to make a correct choice of the information model more predictable and "de-randomize" it. One source of such "randomness" lies in the domain of the training data that was used to train the encoder. For example, if the encoder is a large language model, LLM, or a large vision model, LVM, it has been trained on a huge dataset comprising all sorts of publicly available training examples from all walks of life. Most of these training examples will thus pertain to common general knowledge of the general public. This knowledge is not always applicable to the industrial domain. For example, certain words may have a meaning in the industrial domain that is different from their meaning in the general public domain. In one example, the start-up of an industrial process may be termed "anfahren" in German-language documentation, but "fahren" is the most common term for moving from one place to another. To a LLM that has been trained on the general public domain, the term "anfahren" may appear misleading because the industrial plant is not moving from one place to another while it is being started up.

In extreme cases, the behavior of industrial processes may operate in a very different physical regimes than processes known to the general public and described in general-public literature. For example, the general public knows that, when compressed air expands (such as from a scuba tank), it cools. The physical reason behind this is the Joule-Thomson effect. However, this effect does not work in the same manner for all gases. At room temperature, expanding hydrogen will heat up instead of cooling. But the general public may not know this because cylinders of compressed hydrogen are not a general household staple.

It is a synergistic effect between the pre-selecting of candidate information models on the one hand, and the computing of the confidence measure on the other hand, that the pre-selecting determines an information model that is likely to be appropriate, whereas the confidence measure ensures that the underlying meaning is really what it is meant to be. In particular, if multiple candidate information models are pre-selected with similar closeness or similarity scores, then it is advantageous to finally select the one with the highest confidence.

In essence, the combination of the representation of the information model in embedding space and the confidence is in some way analogous to the combination of a measurement value and a margin of error. The measurement value by itself is of quite limited use if the margin of error is not known.

It is particularly advantageous that the determining of the confidence does not require access to the training data with which the encoder for the encoding into embedding space was trained. This means that the encoder may be used as it is. Any suitable encoder may be used, and by means of the confidence, it is also possible to compare the performance of multiple candidate encoders.

The method can also be viewed from another perspective. It is also perfectly possible that one has a given information model and a plethora of candidate inputs, and the candidate input that is best suited to populate the information model is sought.

Therefore, in a second aspect, the invention provides a computer-implemented method for determining, for a given information model identifying a collection of related information items with semantic meanings that at least partially characterizes the layout, configuration and/or operating state of the industrial plant or part thereof, a suitable input for extracting payload information about the configuration and/or operating state of the industrial plant or any part thereof, out of a plurality of candidate inputs.

In the course of this method, a trained encoder transforms the given information model into a representation in an embedding space. This representation is compared to representations of the multiple candidate inputs in the same embedding space.

Based on the result of this comparison, from the multiple candidate inputs, one or more candidate inputs whose information contained therein is likely to fit into the given information model are pre-selected. For each pre-selected candidate input, a confidence of the semantic suitability of the respective pre-selected input for the information model is computed using a given confidence measure. An input with the best confidence of the semantic suitability is selected as the chosen input whose information contained therein fits into the given information model.

For example, some downstream task, such as an optimization of the control strategy, may expect an input in a particular file format, so in order to perform this downstream task, a file that has this format needs to be populated with information somehow. There are a lot of information sources available in the industrial plant, and the one that is best suited to populate this particular file, thereby allowing best performance of the downstream task, is sought. This situation is somewhat analogous to lodging a request with a court or other authority. The request needs to be lodged on a prescribed form that asks for specific items of information required by law, and it is upon the requester to get this information together and fill out the form.

What has been discussed before in connection with the first method that starts from a given input is valid mutatis mutandis for this method that starts from a given information model as well. Inputs and information models just swap places. Also, the further advantageous embodiments discussed below are valid for both methods, whether starting from a given input or starting from a given information model.

In a particularly advantageous embodiment, the method further comprises:
- extracting, by a trained extractor, for at least one information item identified by the chosen or given information model, corresponding payload information from the input that relates to this information item;
- in-processing the extracted payload information according to requirements of this information model; and
- storing the in-processed information in association with an identifier of the information item.

The end result is then that, no matter whether the method is started from a given input or from a given information model, a suitable combination of one or more inputs and one or more information models has been matched together. The filled-in information model is then usable for any downstream task, such as executing or controlling an industrial process on the industrial plant, or optimizing the control strategy.

In particular, the in-processing of the payload information may comprise: where the information model prescribes limits as to the possibilities what a particular information item can be, determining, from the extracted payload information, the closest, most similar, most likely and/or more plausible of the given possibilities as the in-processed information.

For example, regarding a particular field, an information model may allow for a set of discrete values only. For example, in a set of parallel pumps or other resources, the number of pumps or other resources to be installed, or to be kept running at any one time, must always be an integer. Also, many valves can be only switched to one out of a set of discrete positions (such as "open" or "closed"). There may be more fields that only accept numeric values. If it is, as per the method presented here, known in principle with a reasonable confidence that a certain item of payload information belongs into a particular field, then said constraints on the possibilities may be used to disambiguate ambiguous input information.

In a further particularly advantageous embodiment, the method further comprises computing a distribution function from representations of candidates of what is sought, namely candidate information models respectively candidate inputs, in the embedding space. The confidence measure then comprises a value of this distribution function sampled based at least in part on the representation of what is given, namely the given input respectively the given information model, in the embedding space.

That is, when starting from a given input and seeking a suitable information model, the distribution function is computed from the representations of multiple candidate information models and sampled based at least in part on the representation of the given input. When starting from a given information model and seeking a suitable input, the distribution function is computed from the representations of multiple candidate inputs and sampled based at least in part on the representation of the given information model.

The use of the distribution function introduces a notion of likeliness into the determination of the confidence. The distribution function comprises pooled experience from the representations of the candidate information models, respectively from the representations of multiple candidate inputs, in embedding space. It gives an estimate how likely the given input text can contain content that is relevant to candidate information models given this pooled experience. In particular, the distribution function is a measure as to whether the candidate information models on the one hand, and the given input text on the other hand, relate to same or similar subject-matter, rather than talking at cross-purposes. For example, if the candidate information models all relate to different file formats that describe the layout of the industrial plant somehow, and the given input contains information about this layout in textual, diagram or image form, then the distribution function will have a high value. But if the given input is an image of the outside of the factory hall where the layout of the inside is not visible at all, the distribution function will have a low value.

The same applies mutatis mutandis when viewed from the perspective of a given information model. That is, the distribution function pools experience from the candidate inputs, and its evaluation measures whether the given information model is essentially related to the same subject-matter as the candidate inputs. For example, if the given information model relates to a module type package, MTP, that describes a module of a modular industrial plant, or to a part of such MTP, and the candidate inputs relate to modular industrial plants somehow, then the distribution function will have a high value. But if the candidate inputs all relate to non-modular, monolithic industrial plants, then the distribution function will have a low value. In particular, modules may relate to important functionalities of the plant, such as stirring, reaction or heating, and set-ups for producing various products may be assembled from modules providing such generic functionalities in a Lego manner.

In a further particularly advantageous embodiment, the distribution function is sampled based on a distance and/or similarity measured
- between the representation of the given input and the representation of the candidate information model in the embedding space, if an input is given and an information model is sought, or
- between the representation of the candidate input and the representation of the given information model in the embedding space, if an information model is given and an input is sought, respectively.

In this manner, the likelihood measured by the distribution function is tied to the closeness or similarity measured in the embedding space. The farther away representations are apart in embedding space, the more unlikely it is that they relate to same or similar subject-matter, and that the input is really suitable for populating the information model. In this manner, the existing training of the encoder to map related subject-matters to close-together points in the embedding space is exploited.

In particular, a multivariate Gaussian distribution may be chosen as the distribution function. This expresses that, the closer the representation of what is given (i.e., inputs or information models) is to the representations of candidates for what is sought (i.e., information models or inputs, respectively), the more likely it is that what is given and what is sought fit together from a semantic point of view. Alternatively or in combination to this, any other suitable probability distribution may be used.

One further advantage of having a distribution function is that it may be further adapted to the use case at hand. In this manner, additional knowledge about the domain of application may be brought into the distribution function. To this end, in a further particularly advantageous embodiment, an ansatz that is characterized by a set of free parameters is provided for the distribution function. The free parameters of this ansatz are optimized towards the goal that a mean error between the distribution function on the one hand and the representations of the candidate information models, respectively of the candidate inputs, in the embedding space on the other hand is minimized. This framework considers all the experience in the respective candidate examples, while at the same time allowing headroom for introducing further optimization goals.

Therefore, in a further advantageous embodiment, the free parameters are further optimized towards a different optimization goal. For example, the two-dimensional Gaussian distribution *p*(*x*₁, *x*₂) of variables *x*₁ and *x*₂ is hat-shaped when the values of *x*₂) are seen as a third dimension and this is viewed from the side. When viewed from the top, this contains concentric circles. By introducing additional free parameters, these concentric circles may be modified to ellipses. The same applies mutatis mutandis when extending to further (hyper-)dimensions. In particular, introducing the ellipticity (or other modification) allows to adjust the relative importances of dimensions in the embedding space. In the mentioned example of a process where a gas expands and changes its temperature due to the Joule-Thomson effect, a particularly important dimension may relate to a quantity that may cause a switch from one physical regime (gas cools upon expansion) to another physical regime (gas heats upon expansion). As discussed before, a generically trained model may have learned what happens with normal air by virtue of having been trained with common general knowledge, but it may not know what happens with hydrogen because not everybody has it in gaseous form.

Thus, the further optimization may use the existing parameters of the ansatz, but additional parameters may be added to the ansatz as well. The further optimization goal may manifest itself in additional loss terms in the existing parameters, in the new parameters, or any suitable combination of existing and new parameters.

In particular, such an additional optimization allows the introduction of an additional feedback functionality. A human expert may assess the above-described thus-obtained transformation (i.e., filled-out file formats, or populated information models, etc.), and provide these assessments. Thereon-based, a database of extended training data: i.e., I/O pairs of this transformation (original input plus (e.g. ML-based) determined output) and their respective confidence values, AND the human-expert-provided assessment, may be set up. Using these assessment data, the standard-deviation-values (sigma) in the multivariate Gaussian Distribution functions (or to be more precise, a parameter lambda (n-dimensional, too) in the Gaussian Distribution equation, which is equal to 1 by default, and which in the equation is multiplied with the sigma values, may be optimized (i.e., adapted!) so that in the future, the confidence values are more-accurately and more-suitably computed, and perhaps, another "top-x-nearest" target-format-identifier-embedding-representation is selected as the one with the highest confidence. That is, e.g., if one candidate information model is among the top-x, but not the top-1 one, a higher confidence may outgun the better similarity/closeness of another candidate information model that has a much lower confidence to show for.

The advantage of optimizing free parameters of the distribution function over optimizing the parameters of the encoder, and/or of the extractor, is that a retraining or fine-tuning of these models is a lot more expensive. These models may remain untouched, so that, e.g., generically trained foundation models may be used in their stock state.

Furthermore, e.g., beyond Low-Rank Adapters (LoRA-methods), which are another class of "parameter-efficient fine-tuning" methods (i.e., with lower cost than compared with training the entire foundation model matrix), the free-parameters-optimization-based approach for confidence computation also allows to transfer the confidence computation (and underlying knowledge and feedback integration) to other "out-of-the-box models", too!

In a further particularly advantageous embodiment, the confidence measure is (further) dependent on a metric distance, and/or on a cosine similarity, between the representation of the given input, respectively of the candidate input, in the embedding space on the one hand, and the representation of the candidate information model, respectively of the given information model, in the embedding space on the other hand. One example of such a confidence measure is a product of said metric distance and/or cosine similarity times the value of the distribution function. This further emphasizes that some notion of likelihood is already brought about by the use of the encoder that has been trained to map related subject-matters to close or similar representations.

As discussed before, in a further particularly advantageous embodiment, the trained encoder, and/or the extractor, is comprised in
- a large language model, LLM, that is configured to iteratively predict next words of text sequences, and/or
- a large vision model, LVM, that is configured to capture semantic meanings from images.

The LLM is particularly suitable for processing text-based information, such as verbal written documentation or I/O lists. The LVM is particularly suitable for processing image-based information, such as P&ID diagrams, process diagrams, or photos showing the layout of the plant or any part thereof.

In particular, the information model may comprise:
- a file format or record format comprising fields with given field identifiers and data types; and/or
- a standard comprising fields with given semantic meanings and measurement units; and/or
- a vocabulary, taxonomy or ontology that defines relationships between entities in the industrial plant,
or any respective part thereof, e.g., one identifier, one field, one specifier of a standard, or one concept of an ontology.

The method will then cause a de-variation and de-randomization when populating the information model with payload information from the input. In particular, variations in language or in symbols used in the input will be levelled. That is, inputs from disparate sources may be consolidated in one format. For example, one and the same information model may be populated with payload information from multiple inputs.

As discussed before, in particular, the input may comprise:
- a control narrative that describes an industrial process to be executed on the industrial plant; and/or
- a process and instrumentation diagram, P&ID, of the industrial plant; and/or
- a process flow diagram, PFD, of the industrial plant; and/or
- an input/output list that contains all input and output devices connected to an individual controller or to distributed control system, DCS, of the industrial plant.

Much of the available documentation on industrial plants is in these types of documents. These documents allow quite some freedom of variation. For example, in control narratives, the language is not strictly standardized. Also, in P&ID and PFD diagrams, the used symbols are not always consistent.

Because they are computer-implemented, the present methods may be embodied in the form of a software. The invention therefore also relates to a computer program with machine-readable instructions that, when executed by one or more computers and/or compute instances, cause the one or more computers and/or compute instances to perform a method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

### DESCRIPTION OF THE FIGURES

In the following, the invention is illustrated using Figures without any intention to limit the scope of the invention. The Figures show:
Figure 1: Exemplary embodiment of the method 100 for determining a suitable information model 5 for a given input 1, respectively of the method 200 for determining a suitable input 1 for a given information model 5;
Figure 2: Illustration of an exemplary manner of determining the confidence 8 by sampling from a distribution function 10.

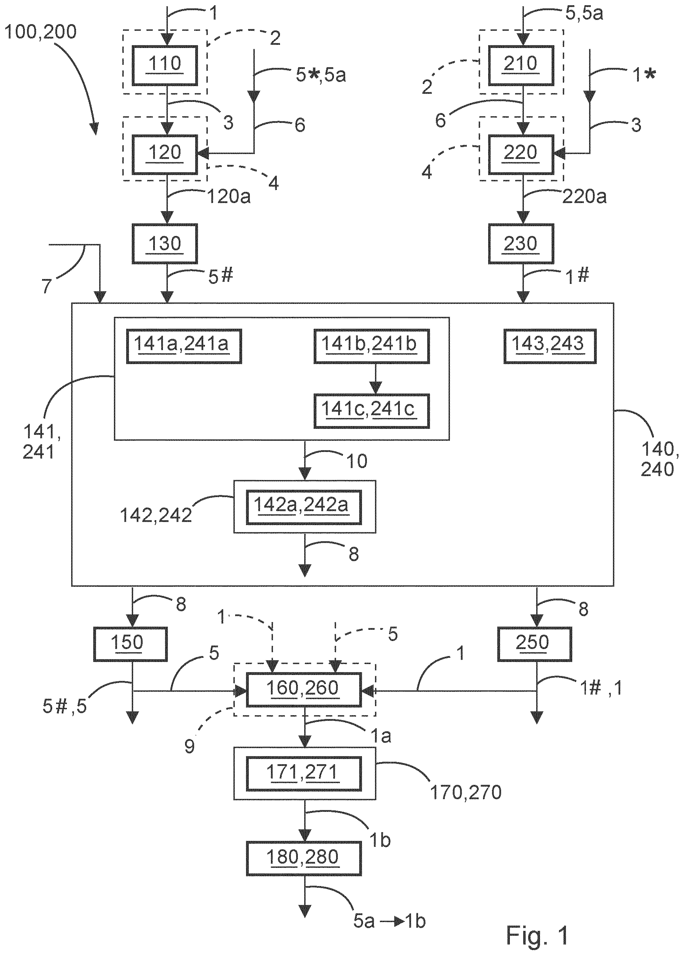

Figure 1 is a schematic flow chart that shows an exemplary embodiment of the method 100 for determining a suitable information model 5 for a given input 1, as well as an exemplary embodiment of the method 200 for determining a suitable input 1 for a given information model 5.

The method 100 starts from the situation that an input 1 is given and a suitable information model 5 that may be populated with this input 1 is sought.

In step 110, a trained encoder 2 transforms the given input 1 into a representation 3 in an embedding space 4.

In step 120, this representation 3 is compared to representations 6 of multiple candidate information models 5* in the same embedding space 4. Each information model 5* identifies a collection of related information items 5a with semantic meanings. This collection at least partially characterizes the layout, configuration and/or operating state of the industrial plant or part thereof.

In step 130, based on the result 120a of this comparison, one or more candidate information models 5# into which the information contained in the given input 1 is likely to fit are selected from the multiple candidate information models 5*.

The method 200 starts from the situation that an information model 5 as described above is given, and an input 1 suitable for populating this information model 5 is sought.

In step 210, a trained encoder 2 transforms the given information model 5 into a representation 6 in an embedding space 4.

In step 220, this representation 6 is compared to the representations 3 of the multiple candidate inputs 1* in the same embedding space 4.

In step 230, based on the result 220a of this comparison, one or more candidate inputs 1# whose information contained therein is likely to fit into the given information model 5 are pre-selected from the multiple candidate inputs 1*.

In both methods 100 and 200, in step 140, 240, using a given confidence measure, a confidence 8 of the semantic suitability of information models for inputs is computed. In step 140 of method 100, the confidence 8 relates to the semantic suitability of the respective pre-selected information model 5# for the given input 1. In step 240 of method 200, the confidence 8 relates to the semantic suitability of the respective pre-selected input 1# for the information model 5.

According to block 141, 241, a distribution function 10 may be computed from the representations 6 of the multiple candidate information models 5* in the embedding space 4, respectively from the representations 3 of multiple candidate inputs 1* in the embedding space 4. According to block 142, 242, the confidence measure 8 may then comprise a value of this distribution function 10 sampled based at least in part on the representation 3 of the given input text 1 in the embedding space 4, respectively on the representation 6 of the given information model 5 in the embedding space 4.

In particular, according to block 141a, 241a, a multivariate Gaussian distribution may be chosen as the distribution function 10.

According to block 141b, 241b, an ansatz for the distribution function 10 that is characterized by a set of free parameters may be provided. According to block 141c, 241c, the free parameters may then be optimized towards the goal that a mean error between the distribution function 10 on the one hand and the representations 6 of the candidate information models 5*, respectively of the candidate inputs 1*, in the embedding space 4 on the other hand is minimized.

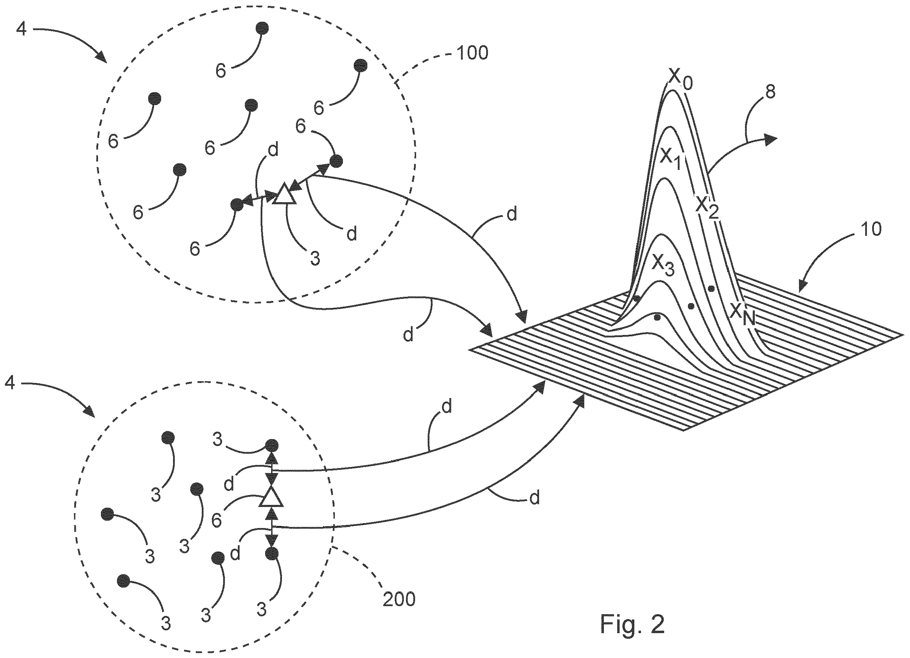

According to block 142a, 242a, the value of the distribution function 10 may be sampled based on a distance and/or similarity measured between the representation 3 of the given input 1, respectively of the candidate input 1*, in the embedding space 4 on the one hand, and the representation 6 of the candidate information model 5*, respectively of the given information model 5, in the embedding space 4 on the other hand. This will be illustrated in Figure 2.

According to block 143, 243, the confidence measure 8 may be dependent on a metric distance, and/or on a cosine similarity, between the representation 3 of the given input 1, respectively of the candidate input 1*, in the embedding space 4 on the one hand, and the representation 6 of the candidate information model 5*, respectively of the given information model 5, in the embedding space 4 on the other hand.

In step 150 of the method 100, an information model 5# with the best confidence 8 of the semantic suitability as the chosen information model 5 into which the information contained in the given input 1 fits is selected. Likewise, in step 250 of the method 200, an input 1# with the best confidence 8 of the semantic suitability as the chosen input 1 whose information contained therein fits into the given information model 5 is selected. In both cases, the end result is the same: There is a combination of one input 1 and one information model 5. One of these was given from the start, and the other one was determined in the course of the method.

In step 160, 260, for at least one information item 5a identified by the chosen or given information model 5, a trained extractor 9 extracts corresponding payload information 1a from the (given or chosen) input 1 that relates to this information item 5a.

In step 170, 270, the extracted payload information 1a is in-processed according to requirements of this (chosen or given) information model 5.

According to block 171, 271, this in-processing may comprise: where the information model 5 prescribes limits as to the possibilities what a particular information item can be, determining, from the extracted payload information (1a), the closest, most similar, most likely and/or more plausible of the given possibilities as the in-processed information 1b.

In step 180, 280, the in-processed information 1b is stored in association with an identifier of the information item 5a.

Figure 2 illustrates how the confidence 8 may be determined using a distribution function 10.

In the course of the method 100, the representation 3 of the given input 1 is compared in the embedding space 4 to representations 6 of candidate information models 5*. This comparison involves determining distances d. These distances d are measured as vectors in the embedding space 4.

Likewise, in the course of the method 200, the representation 6 of the given information model 5 is compared in the embedding space 4 to representations 3 of candidate inputs 1*. This comparison involves determines distances d that are measured as vectors in the embedding space 4 as well.

In the example shown in Figure 2, the distribution function 10 is a multivariate Gaussian distribution that has been fitted to the representations 6 of the candidate information models 5*, respectively to the representations 3 of the candidate inputs 1*. Exemplary points to which the distribution function 10 has been fitted are labelled as x₀, x₁, x₂, x₃ and x_{N} in Figure 2.

### List of reference signs:

- 1: input with payload information 1a
- 1*: candidate inputs
- 1#: pre-selected input
- 1a: payload information in input 1, 1*
- 1b: in-processed version of payload information 1
- 2: trained encoder
- 3: representation of inputs 1, 1* in embedding space 4
- 4: embedding space
- 5: information model
- 5*: candidate information model
- 5#: pre-selected information model
- 5a: information item in information model 5, 5*
- 6: representation of information model 5, 5* in embedding space 4
- 7: confidence measure
- 8: confidence of semantic suitability
- 9: trained extractor
- 10: distribution function
- 100: method for determining suitable information model 5 for input 1
- 110: generating representation 3 of input 1 in embedding space 4
- 120: comparing representation 3 to representations 6 of information models 5*
- 120a: result of comparison
- 130: pre-selecting information models 5#
- 140: computing confidence 8 of semantic suitability
- 141: computing distribution function 10
- 141a: using Gaussian distribution function
- 141b: providing parametrized ansatz
- 141c: optimizing parameters of parametrized ansatz
- 142: using value of distribution function 10 in confidence 8
- 142a: sampling value of distribution function 10 with distance/similarity
- 143: making confidence 8 directly dependent on distance/similarity
- 150: selecting information model 5# with best confidence 8
- 160: extracting payload information 1a from input 1
- 170: in-processing payload information 1a
- 171: discretizing in-processed information 1b according to limits
- 180: store in-processed payload information 1b for information item 5a
- 200: method for determining suitable input 1 for information model 5
- 210: generating representation 6 of information model 5 in embedding space 4
- 220: comparing representation 6 to representations 3 of candidate inputs 1*
- 230: pre-selecting candidate inputs 1#
- 240: computing confidence 8 of semantic suitability
- 241: computing distribution function 10
- 241a: using Gaussian distribution function
- 241b: providing parametrized ansatz
- 241c: optimizing parameters of parametrized ansatz
- 242: using value of distribution function 10 in confidence 8
- 242a: sampling value of distribution function 10 with distance/similarity
- 250: selecting input 1# with best confidence 8
- 260: extracting payload information 1a from input 1
- 270: in-processing payload information 1a
- 271: discretizing in-processed information 1b according to limits
- 280: store in-processed payload information 1b for information item 5a
- d: distance in embedding space

## Claims

1. A computer-implemented method (100) for determining, for a given input (1) containing payload information (1a) about the layout, configuration and/or operating state of an industrial plant or any part thereof, an information model (5) into which the information contained in the given input fits, comprising the steps of:
• transforming (110), by a trained encoder (2), the given input (1) into a representation (3) in an embedding space (4);
• comparing (120) this representation (3) to representations (6) of multiple candidate information models (5*) in the same embedding space (4), wherein each information model (5*) identifies a collection of related information items (5a) with semantic meanings that at least partially characterizes the layout, configuration and/or operating state of the industrial plant or part thereof;
• pre-selecting (130), based on the result (120a) of this comparison, from the multiple candidate information models (5*), one or more candidate information models (5#) into which the information contained in the given input (1) is likely to fit;
• computing (140), for each pre-selected information model (5#), using a given confidence measure (7), a confidence (8) of the semantic suitability of the respective pre-selected information model (5#) for the given input (1); and
• selecting (150) an information model (5#) with the best confidence (8) of the semantic suitability as the chosen information model (5) into which the information contained in the given input (1) fits.

2. A computer-implemented method (200) for determining, for a given information model (5) identifying a collection of related information items (5a) with semantic meanings that at least partially characterizes the layout, configuration and/or operating state of the industrial plant or part thereof, from a plurality of candidate inputs (1*), a suitable input (1) for extracting payload information (1a) about the configuration and/or operating state of the industrial plant or any part thereof, comprising the steps of:
• transforming (210), by a trained encoder (2), the given information model (5) into a representation (6) in an embedding space (4);
• comparing (220) this representation (6) to the representations (3) of the multiple candidate inputs (1*) in the same embedding space (4);
• pre-selecting (230), based on the result (220a) of this comparison, from the multiple candidate inputs (1*), one or more candidate inputs (1#) whose information contained therein is likely to fit into the given information model (5);
• computing (240), for each pre-selected candidate input (1#), using a given confidence measure (7), a confidence (8) of the semantic suitability of the respective pre-selected input (1#) for the information model (5); and
• selecting (250) an input (1#) with the best confidence (8) of the semantic suitability as the chosen input (1) whose information contained therein fits into the given information model (5).

3. The method (100, 200) of any one of claims 1 or 2, further comprising:
• extracting (160, 260), by a trained extractor (9), for at least one information item (5a) identified by the chosen or given information model (5), corresponding payload information (1a) from the input (1) that relates to this information item (5a);
• in-processing (170, 270) the extracted payload information (1a) according to requirements of this information model (5); and
• storing (180, 280) the in-processed information (1b) in association with an identifier of the information item (5a).

4. The method (100, 200) of claim 3, wherein the in-processing (170, 270) of the payload information (1a) comprises: where the information model (5) prescribes limits as to the possibilities what a particular information item can be, determining (171, 271), from the extracted payload information (1a), the closest, most similar, most likely and/or more plausible of the given possibilities as the in-processed information (1b).

5. The method (100, 200) of any one of claims 1 to 4, wherein
• the method further comprises computing (141, 241), from the representations (6) of the multiple candidate information models (5*) in the embedding space (4), respectively from the representations (3) of multiple candidate inputs (1*) in the embedding space (4), a distribution function (10); and
• the confidence measure (8) comprises (142, 242) a value of this distribution function (10) sampled based at least in part on the representation (3) of the given input text (1) in the embedding space (4), respectively on the representation (6) of the given information model (5) in the embedding space (4).

6. The method (100) of claim 5, wherein the value of the distribution function (10) is sampled (142a, 242a) based on a distance and/or similarity measured between the representation (3) of the given input (1), respectively of the candidate input (1*), in the embedding space (4) on the one hand, and the representation (6) of the candidate information model (5*), respectively of the given information model (5), in the embedding space (4) on the other hand.

7. The method (100) of any one of claims 5 to 6, wherein a multivariate Gaussian distribution is chosen (141a, 241a) as the distribution function (10).

8. The method (100) of any one of claims 5 to 7, wherein the computing of the distribution function (10) comprises:
• providing (141b, 241b) an ansatz that is **characterized by** a set of free parameters; and
• optimizing (141c, 241c) the free parameters towards the goal that a mean error between the distribution function (10) on the one hand and the representations (6) of the candidate information models (5*), respectively of the candidate inputs (1*), in the embedding space (4) on the other hand is minimized.

9. The method (100) of claim 8, wherein the free parameters are further optimized towards a different optimization goal.

10. The method (100) of any one of claims 1 to 9, wherein the confidence measure (8) is dependent (143, 243) on a metric distance, and/or on a cosine similarity, between the representation (3) of the given input (1), respectively of the candidate input (1*), in the embedding space (4) on the one hand, and the representation (6) of the candidate information model (5*), respectively of the given information model (5), in the embedding space (4) on the other hand.

11. The method (100) of any one of claims 1 to 10, wherein the trained encoder (2), and/or the extractor (9), is comprised in
• a large language model, LLM, that is configured to iteratively predict next words of text sequences, and/or
• a large vision model, LVM, that is configured to capture semantic meanings from images.

12. The method (100) of any one of claims 1 to 11, wherein the information model (5) comprises:
• a file format or record format comprising fields with given field identifiers and data types; and/or
• a standard comprising fields with given semantic meanings and measurement units; and/or
• a vocabulary, taxonomy or ontology that defines relationships between entities in the industrial plant,
or any respective part thereof.

13. The method (100) of any one of claims 1 to 12, wherein the input (1) comprises:
• a control narrative that describes an industrial process to be executed on the industrial plant; and/or
• a process and instrumentation diagram, P&ID, of the industrial plant; and/or
• a process flow diagram, PFD, of the industrial plant; and/or
• an input/output list that contains all input and output devices connected to an individual controller or to distributed control system, DCS, of the industrial plant.

14. A computer program, comprising machine-readable instructions that, when executed on one or more computers and/or compute instances, causes the one or more computers and/or compute instances to perform the method (100, 200) of any one of claims 1 to 13.

15. A non-transitory machine-readable data carrier, and/or a download product, with the computer program of claim 14.

16. One or more computers and/or compute instances with the computer program of claim 14, and/or with the machine-readable data carrier and/or download product of claim 15.

## Amended claims

### Amended claims in accordance with Rule 137(2) EPC.

1. A computer-implemented method (100) for determining, for a given input (1) containing payload information (1a) about the layout, configuration and/or operating state of an industrial plant or any part thereof, an information model (5) into which the information contained in the given input fits, comprising the steps of:
• transforming (110), by a trained encoder (2), the given input (1) into a representation (3) in an embedding space (4);
• comparing (120) this representation (3) to representations (6) of multiple candidate information models (5*) in the same embedding space (4), wherein each information model (5*) identifies a collection of related information items (5a) with semantic meanings that at least partially characterizes the layout, configuration and/or operating state of the industrial plant or part thereof;
• pre-selecting (130), based on the result (120a) of this comparison, from the multiple candidate information models (5*), one or more candidate information models (5#) into which the information contained in the given input (1) is likely to fit;
• computing (140), for each pre-selected information model (5#), using a given confidence measure (7), a confidence (8) of the semantic suitability of the respective pre-selected information model (5#) for the given input (1),
o wherein this computing comprises computing (141), from the representations (6) of the multiple candidate information models (5*) in the embedding space (4), respectively from the representations (3) of multiple candidate inputs (1*) in the embedding space (4), a distribution function (10); and
o the confidence measure (8) comprises (142) a value of this distribution function (10) sampled based at least in part on the representation (3) of the given input text (1) in the embedding space (4), respectively on the representation (6) of the given information model (5) in the embedding space (4),
and wherein the computing of the distribution function (10) comprises:
∘ providing (141b) an ansatz that is **characterized by** a set of free parameters; and
∘ optimizing (141c) the free parameters towards the goal that a mean error between the distribution function (10) on the one hand and the representations (6) of the candidate information models (5*), respectively of the candidate inputs (1*), in the embedding space (4) on the other hand is minimized; and
• selecting (150) an information model (5#) with the best confidence (8) of the semantic suitability as the chosen information model (5) into which the information contained in the given input (1) fits.

2. A computer-implemented method (200) for determining, for a given information model (5) identifying a collection of related information items (5a) with semantic meanings that at least partially characterizes the layout, configuration and/or operating state of the industrial plant or part thereof, from a plurality of candidate inputs (1*), a suitable input (1) for extracting payload information (1a) about the configuration and/or operating state of the industrial plant or any part thereof, comprising the steps of:
• transforming (210), by a trained encoder (2), the given information model (5) into a representation (6) in an embedding space (4);
• comparing (220) this representation (6) to the representations (3) of the multiple candidate inputs (1*) in the same embedding space (4);
• pre-selecting (230), based on the result (220a) of this comparison, from the multiple candidate inputs (1*), one or more candidate inputs (1#) whose information contained therein is likely to fit into the given information model (5);
• computing (240), for each pre-selected candidate input (1#), using a given confidence measure (7), a confidence (8) of the semantic suitability of the respective pre-selected input (1#) for the information model (5),
o wherein this computing comprises computing (241), from the representations (6) of the multiple candidate information models (5*) in the embedding space (4), respectively from the representations (3) of multiple candidate inputs (1*) in the embedding space (4), a distribution function (10); and
∘ the confidence measure (8) comprises (242) a value of this distribution function (10) sampled based at least in part on the representation (3) of the given input text (1) in the embedding space (4), respectively on the representation (6) of the given information model (5) in the embedding space (4),
and wherein the computing of the distribution function (10) comprises:
• providing (241b) an ansatz that is **characterized by** a set of free parameters; and
• optimizing (241c) the free parameters towards the goal that a mean error between the distribution function (10) on the one hand and the representations (6) of the candidate information models (5*), respectively of the candidate inputs (1*), in the embedding space (4) on the other hand is minimized;; and
• selecting (250) an input (1#) with the best confidence (8) of the semantic suitability as the chosen input (1) whose information contained therein fits into the given information model (5).

3. The method (100, 200) of any one of claims 1 or 2, further comprising:
• extracting (160, 260), by a trained extractor (9), for at least one information item (5a) identified by the chosen or given information model (5), corresponding payload information (1a) from the input (1) that relates to this information item (5a);
• in-processing (170, 270) the extracted payload information (1a) according to requirements of this information model (5); and
• storing (180, 280) the in-processed information (1b) in association with an identifier of the information item (5a).

4. The method (100, 200) of claim 3, wherein the in-processing (170, 270) of the payload information (1a) comprises: where the information model (5) prescribes limits as to the possibilities what a particular information item can be, determining (171, 271), from the extracted payload information (1a), the closest, most similar, most likely and/or more plausible of the given possibilities as the in-processed information (1b).

5. The method (100) of any one of claims 1 to 4, wherein the value of the distribution function (10) is sampled (142a, 242a) based on a distance and/or similarity measured between the representation (3) of the given input (1), respectively of the candidate input (1*), in the embedding space (4) on the one hand, and the representation (6) of the candidate information model (5*), respectively of the given information model (5), in the embedding space (4) on the other hand.

6. The method (100) of any one of claims 1 to 5, wherein a multivariate Gaussian distribution is chosen (141a, 241a) as the distribution function (10).

7. The method (100) of any one of claims 1 to 6, wherein the free parameters are further optimized towards a different optimization goal.

8. The method (100) of any one of claims 1 to 7, wherein the confidence measure (8) is dependent (143, 243) on a metric distance, and/or on a cosine similarity, between the representation (3) of the given input (1), respectively of the candidate input (1*), in the embedding space (4) on the one hand, and the representation (6) of the candidate information model (5*), respectively of the given information model (5), in the embedding space (4) on the other hand.

9. The method (100) of any one of claims 1 to 8, wherein the trained encoder (2), and/or the extractor (9), is comprised in
• a large language model, LLM, that is configured to iteratively predict next words of text sequences, and/or
• a large vision model, LVM, that is configured to capture semantic meanings from images.

10. The method (100) of any one of claims 1 to 9, wherein the information model (5) comprises:
• a file format or record format comprising fields with given field identifiers and data types; and/or
• a standard comprising fields with given semantic meanings and measurement units; and/or
• a vocabulary, taxonomy or ontology that defines relationships between entities in the industrial plant,
or any respective part thereof.

11. The method (100) of any one of claims 1 to 10, wherein the input (1) comprises:
• a control narrative that describes an industrial process to be executed on the industrial plant; and/or
• a process and instrumentation diagram, P&ID, of the industrial plant; and/or
• a process flow diagram, PFD, of the industrial plant; and/or
• an input/output list that contains all input and output devices connected to an individual controller or to distributed control system, DCS, of the industrial plant.

12. A computer program, comprising machine-readable instructions that, when executed on one or more computers and/or compute instances, causes the one or more computers and/or compute instances to perform the method (100, 200) of any one of claims 1 to 11.

13. A non-transitory machine-readable data carrier, and/or a download product, with the computer program of claim 12.

14. One or more computers and/or compute instances with the computer program of claim 12, and/or with the machine-readable data carrier and/or download product of claim 13.
